# EUROPÄISCHE PATENTSCHRIFT

(11) **EP 3 656 181 B1**
(45) Veröffentlichungstag und Bekanntmachung des Hinweises auf die Patenterteilung: **07.09.2022**
(21) Anmeldenummer: 18746573.7
(22) Anmeldetag: 17.07.2018
(51) Int. Cl.: H04W 88/02, H04W 12/40, H04W 24/04

(54) **AUFRECHTERHALTEN EINER NETZWERKVERBINDUNG**
MAINTENANCE OF A NETWORK CONNECTION
MAINTIEN D'UNE CONNEXION RÉSEAU

(30) Priorität: 21.07.2017 DE 102017006950
(43) Veröffentlichungstag der Anmeldung: 27.05.2020
(73) Patentinhaber: Giesecke+Devrient Mobile Security GmbH, 81677 München (DE)
(72) Erfinder: ECKARDT, Stefan, 82291 Mammendorf (DE)
(74) Vertreter: Giesecke + Devrient IP
(86) Internationale Anmeldenummer: PCT/EP2018/000358
(87) Internationale Veröffentlichungsnummer: WO 2019/015799

(56) Entgegenhaltungen:
- US-A1- 2008 032 743
- "Universal Mobile Telecommunications System (UMTS); LTE UICC power optimisation for Machine-Type Communication (3GPP TR 31.970 version 14.0.0 Release 14)", ETSI TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. 3GPP CT, Nr. V14.0.0 6. Juni 2017 (2017-06-06), Seiten 1-16, XP014291040, Gefunden im Internet: URL:http://www.etsi.org/deliver/etsi_tr/13 1900_131999/131970/14.00.00_60/tr_131970v1 40000p.pdf [gefunden am 2017-06-06]
- "3rd Generation Partnership Project; Technical Specification Group Core Network and Terminals; Characteristics of the Universal Subscriber Identity Module (USIM) application", 3GPP STANDARD; 31102-C60, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 6. Januar 2015 (2015-01-06), XP050916966, Gefunden im Internet: URL:http://www.3gpp.org/ftp/Specs/zItuInfo /M.2012-2/2014-12/Rel-12/31_series/ [gefunden am 2015-01-06]
- "Universal Mobile Telecommunications System (UMTS); LTE; UICC-terminal interface; Universal Subscriber Identity Module (USIM) application test specification (3GPP TS 31.121 version 14.0.0 Release 14)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP CT, no. V14.0.0 11 April 2017 (2017-04-11), pages 1-356, XP014292072, Retrieved from the Internet: URL:http://www.etsi.org/deliver/etsi_ts/13 1100_131199/131121/14.00.00_60/ts_131121v1 40000p.pdf [retrieved on 2017-04-11]

## Beschreibung

Die vorliegende Erfindung ist gerichtet auf ein Verfahren zum sicheren Aufrechterhalten einer Netzwerkverbindung in einem Anwendungsszenario, in welchem beispielsweise bei einer iUICC ein temporäres Deaktivieren zumindest eines Teils eines Betriebssystems erfolgt. Die vorliegende Erfindung ist ferner gerichtet auf eine entsprechend eingerichtete Systemanordnung sowie auf ein mobiles Endgerät. Ferner werden ein Kommunikationsprotokoll und ein Computerprogrammprodukt vorgeschlagen, mit Steuerbefehlen, welche das Verfahren ausführen bzw. die vorgeschlagene Systemanordnung bzw. das vorgeschlagene mobile Endgerät betreiben.

ETSI TS 102 221 liegt in diversen Versionen vor und beschäftigt sich mit physikalischen und logischen Charakteristika von Smartcards bzw. sogenannten UICC.

3GPP TS 31.102 beschreibt Charakteristika einer USIM-Anwendung.

Bekannt ist es, ein Sicherheitselement beispielsweise in Form einer SIM-Karte bereitzustellen, wobei die SIM-Karte Parameter liefert, welche es einem mobilen Endgerät ermöglichen, mit einer Netzwerkkomponente eine Datenverbindung herzustellen. Hierbei finden netzwerktypische Komponenten Einsatz. Entsprechende Komponenten kennt der Fachmann bereits aus der Mobilfunkbranche und kennt insbesondere, dass eine SIM-Karte auch als eine integrierte SIM-Karte, beispielsweise eine UICC, bereitgestellt werden kann. Hierbei steht die Abkürzung UICC für Universal Integrated Circuit Card, also eine Chipkarte für Mobiltelefone, welche beispielsweise auch mit einem sogenannten Baseband-Prozessor zusammengeführt werden kann. Hierzu hat sich die Bezeichnung iUICC eingebürgert, wobei das vorangestellte i für "integrated" stehen kann.

Ferner ist es bekannt, dass beispielsweise auf einem mobilen Endgerät, wie einem Smartphone, mehrere Betriebssysteme betrieben werden, welche unterschiedliche Funktionalität bereitstellen und hierbei eine Hierarchie bilden.

So ist es möglich, ein erstes Betriebssystem bereitzustellen, welches eine Hardware des mobilen Endgeräts anspricht und mittels eines sogenannten Bootloaders geladen wird. Hierbei wird gemäß bekannter Verfahren die Hardwarespezifikation des mobilen Endgeräts ausgelesen bzw. konfiguriert. Sobald dies geschehen ist, kann ein weiteres Betriebssystem geladen werden, welches eine Anwendungsschicht bereitstellt, wobei beispielsweise ein Benutzer beliebige Anwendungen auf das mobile Endgerät aufspielen kann und diese zur Ausführung bringen kann. Somit ist es also bekannt, dass auf einem mobilen Endgerät mehrere Betriebssysteme bereitgestellt werden können, wobei es möglich ist, ein einzelnes Betriebssystem zumindest temporär zu deaktivieren bzw. dessen Ausführung zu beenden. Hierbei besteht jedoch bei bekannten Verfahren das Problem, dass das entsprechende Betriebssystem Sicherheitsfunktionalitäten implementieren kann und somit bei einem Deaktivieren von sicherheitsrelevanten Komponenten des Betriebssystems entsprechende Risiken auftreten.

Hierbei ist es bekannt, dass bei einem Auftreten von sicherheitskritischen Problemen die Verbindung im Mobilfunknetz abgebrochen wird, da die Übertragungssicherheit nicht mehr gewährleistet werden kann. Somit ist es also insgesamt problematisch, einzelne Komponenten des Betriebssystems auszuschalten, da dies oftmals ein komplettes Deaktivieren von kritischen Komponenten mit sich führt. Somit ist es also bekannt, bei einem Auftreten eines Fehlers eine Sperre auszuführen, welche das Betreiben des mobilen Endgeräts blockiert und somit einen Angriff verhindert.

Somit ist es also besonders nachteilig, dass bei einem Auftreten eines Deaktivierens von Betriebssystemkomponenten, sei dies gewünscht oder nicht, stets eine Funktionalitätseinschränkung des mobilen Endgeräts erfolgt und dass der Anwender hierauf typischerweise sein mobiles Endgerät neu starten muss. Der Neustart des Geräts verhindert typischerweise ein Auftreten des Fehlers, da das mobile Endgerät wieder neu initialisiert wird und entsprechende Prozesse der Betriebssysteme neu gestartet werden. Somit besteht für den Anwender der Nachteil, dass er nicht in gewohnter Weise auf sein mobiles Endgerät zugreifen kann, sondern dass vielmehr ein Neustart erforderlich ist, was für den Anwender aufwendig und zeitintensiv ist.

Somit besteht ein Bedarf an einer Lösung, welches es erlaubt, gemäß unterschiedlicher Anwendungsszenarien zumindest einen Teil eines Betriebssystems derart abschalten zu können, dass keinerlei Beeinträchtigung der Funktionalität des mobilen Endgeräts entsteht, und insbesondere soll die Kommunikationsverbindung des mobilen Endgerät zum Netzwerk nicht unterbrochen werden. Somit besteht also Bedarf an einer Lösung, welche es unterschiedlichen Anwendungsszenarien erlaubt zu einem Betriebssystem alternative Steuerbefehle auszuführen, ohne dass der Benutzer ein entsprechendes Deaktivieren bemerkt.

Es ist somit eine Aufgabe der vorliegenden Erfindung, ein Verfahren zum sicheren Aufrechterhalten einer Netzwerkverbindung bei einem temporären Austausch von Betriebssystemkomponenten des mobilen Endgeräts bereitzustellen, welches es erlaubt, dass keinerlei sicherheitsrelevante Einschränkungen entstehen und dennoch der Betrieb des mobilen Endgeräts unverändert aus Sicht des Benutzers weitergeführt werden kann. Es ist ferner eine Aufgabe der vorliegenden Erfindung, eine entsprechend eingerichtete Systemanordnung bzw. ein mobiles Endgerät bereitzustellen sowie ein Kommunikationsprotokoll bzw. ein Computerprogrammprodukt mit Steuerbefehlen, welche das vorgeschlagene Verfahren ausführen bzw. die vorgeschlagene Systemanordnung und das mobile Endgerät betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum sicheren Aufrechterhalten einer Netzwerkverbindung bei einem temporären Austausch von Betriebssystemkomponenten eines mobilen Endgeräts vorgeschlagen, aufweisend ein Herstellen der Netzwerkverbindung zwischen dem mobilen Endgerät und einem drahtlosen Kommunikationsnetzwerk unter Verwendung eines Sicherheitselements, dessen Vorhandensein mittels mindestens einer Betriebssystemkomponente des mobilen Endgeräts überprüft wird, ein Deaktivieren der mindestens einen Betriebssystemkomponente, wobei ein temporäres Ausführen einer vorbestimmten Überbrückungsroutine zum Aufrechterhalten der hergestellten Netzwerkverbindung durchgeführt wird, bis die mindestens eine Betriebssystemkomponente wieder aktiviert wird.

Bei dem vorgeschlagenen Verfahren handelt es sich um ein sicheres Verfahren bezüglich des Aufrechterhaltens einer Netzwerkverbindung, da nicht lediglich einzelne Komponenten deaktiviert werden, sondern erfindungsgemäß wird sichergestellt, dass bei einem Deaktivieren von Betriebssystemkomponenten entsprechende Sicherheitsmechanismen fortgeführt werden können bzw. dass Sicherheitsmechanismen, welche beispielsweise in dem Betriebssystem implementiert sind, sofort nach einem Aktivieren von Betriebssystemkomponenten, welche vorher deaktiviert wurden, wieder ausgeführt werden können. Somit wird mittels einer Überbrückungsroutine sichergestellt, dass es stets möglich ist, alternative Sicherheitsmechanismen zu implementieren, bzw. wird verhindert, dass aufgrund der deaktivierten Betriebssystemkomponenten eine Fehlermeldung ausgegeben wird, die dazu führt, dass die Netzwerkverbindung abbricht.

So ist es beispielsweise erfindungsgemäß möglich, eine Nachricht zu versenden, die angibt, dass eine entsprechende Funktionalität vorsätzlich deaktiviert wurde und somit beispielsweise ein Vorhandensein eines Sicherheitselements auch dann gegeben wird, wenn entsprechende Systemkomponenten nicht ausgeführt werden. So erfolgt gemäß herkömmlicher Verfahren ein Detektieren des Vorhandenseins des Sicherheitselements, was gewährleisten soll, dass eine entsprechende SIM-Karte nicht funktionsunfähig ist bzw. nicht vorhanden ist. Da bei mobilen Endgeräten neuerer Bauart typischerweise integrierte SIM-Karten vorliegen, ist ein zerstörungsfreies Entfernen der SIM-Karte typischerweise nicht möglich. Somit ist es also erfindungsgemäß möglich, zumindest vorübergehend auf eine Abfrage des Vorhandenseins der SIM-Karte zu verzichten und dies erst wieder durchzuführen, falls eine entsprechende Betriebssystemkomponente wieder aktiviert wird. Typischerweise wird die sogenannte SIM Presence Detection von einer solchen Betriebssystemkomponente durchgeführt, oder zumindest ist eine solche Betriebssystemkomponente notwendig, um eine Anwendung zu betreiben, die die SIM Presence Detection durchführt.

Somit wird erfindungsgemäß ermöglicht, dass ein gewolltes Abschalten von Betriebssystemkomponenten markiert werden kann, derart, dass das System dies erkennt und nicht auf eine Fehlfunktion bzw. ein Nichtvorhandensein der SIM-Karte schließt.

Das Sicherheitselement kann generell als SIM-Karte vorliegen, wobei die SIM-Karte Daten bereitstellt, die es ermöglichen, dass eine Kommunikationsverbindung mit einem Netzwerk aufgebaut wird. Hierbei werden spezifische Daten bereitgestellt, welche beispielsweise das mobile Endgerät an dem Netzwerk registrieren und einen Hinweis auf die Identität des mobilen Endgeräts liefern. So wird erfindungsgemäß der Nachteil überwunden, dass das mobile Endgerät bei einer ausbleibenden Verifikation der SIM-Karte die Netzwerkverbindung abbricht. Dies wird erfindungsgemäß dadurch bewerkstelligt, dass aktiv eine Überbrückungsroutine gestartet wird, die entweder eine entsprechende Detektion temporär verhindert oder aber eine Nachricht generiert, die anzeigt, dass die SIM-Karte tatsächlich vorhanden ist. Hierbei muss nicht aktiv überprüft werden, ob die SIM-Karte tatsächlich vorhanden ist, sondern vielmehr reicht es bereits aus, dass die Nachricht einen Hinweis darauf erhält, dass zumindest derzeit ein Abfragen des Vorhandenseins der SIM-Karte nicht notwendig bzw. nicht gewollt ist. Somit können also Betriebssystemkomponenten zeitweise deaktiviert werden, und die Netzwerkverbindung kann trotzdem aufrechterhalten werden, da das System nunmehr einen Hinweis darauf erhält, dass das zugrundeliegende Betriebssystem zeitweise nicht in der Lage ist, die sogenannte SIM Presence Detection auszuführen.

Erfindungsgemäß ist es besonders vorteilhaft, dass lediglich ein temporäres Ausführen einer vorbestimmten Überbrückungsroutine vorgesehen ist, derart, dass die Ausführung der Überbrückungsroutine selbsttätig wieder eingestellt wird, sobald die Betriebssystemkomponenten wieder aktiviert werden. Somit wird also der Nachteil des Standes der Technik überwunden, dass bei einem Ausbleiben einer Überprüfung des Vorhandenseins des Sicherheitselements die Funktionalität des mobilen Endgeräts eingeschränkt wird und der Benutzer somit sein mobiles Endgerät neu starten müsste. Dies wird u. a. dadurch bewerkstelligt, dass eben ein temporäres Ausführen derart losgetreten wird, dass bei laufendem Betrieb des mobilen Endgeräts auch erkannt werden kann, wann das Ausführen der Überbrückungsroutine nicht mehr notwendig ist, da nunmehr die wiederaktivierten Betriebssystemkomponenten das Überprüfen des Vorhandenseins der SIM-Karte bzw. des Sicherheitselements übernehmen können.

Das Herstellen der Netzwerkverbindung zwischen dem mobilen Endgerät und einem drahtlosen Kommunikationsnetzwerk erfolgt gemäß bekannter Maßnahmen unter Verwendung eines Sicherheitselements. Hierbei ist typischerweise vorgesehen, dass das Sicherheitselement Parameter bereitstellt, anhand deren das mobile Endgerät identifiziert werden kann und entsprechende Kommunikationsparameter ausgehandelt werden können. Somit dient das Sicherheitselement also dem Erstellen einer Netzwerkverbindung, was typischerweise umfasst, dass ein Sprachkanal und ein Kommunikationskanal eingerichtet wird. Hierzu kommuniziert das mobile Endgerät mit typischen Komponenten eines Kommunikationsnetzwerks, vorzugsweise eines Mobilfunknetzwerks.

Da das Sicherheitselement physisch und/oder logisch eingerichtet ist, besonders sensible und sicherheitsrelevante Daten abzuspeichern, wird stets gefordert, dass bei einem Aufrechterhalten der Netzwerkkommunikation stets auch das Sicherheitselement vorhanden ist. Dies erfolgt mittels periodischer Abfragen, derart, dass beispielsweise in einem Abstand von 30 Sekunden mittels Betriebssystemkomponenten angefragt wird, ob das Sicherheitselement tatsächlich noch vorhanden ist. Entstehen jedoch Anwendungsszenarien, die es erfordern, dass Komponenten des Betriebssystems deaktiviert werden müssen, so würde eine entsprechende Anfrage ins Leere laufen, da die Kommunikationspartner nicht mehr vorhanden sind, da diese aufgrund der Deaktivierung der Betriebssystemkomponenten nicht mehr vorhanden sind. Somit würden Verfahren gemäß dem Stand der Technik die Verbindung abbrechen bzw. keine Überbrückungsroutinen ausführen, sondern vielmehr Routinen, die die Funktionalität des mobilen Endgeräts komplett deaktivieren. Diese sind gemäß dem Stand der Technik lediglich dadurch aufzuheben, dass der Benutzer sein mobiles Endgerät neu startet. Im Gegensatz hierzu ist es besonders vorteilhaft, dass gemäß der vorliegenden Erfindung ein temporäres Ausführen durchgeführt wird, derart, dass Mechanismen bestehen, die das Ausführen der Überbrückungsroutine wieder beenden. Dies erfolgt erfindungsgemäß im laufenden Betrieb, derart, dass der Benutzer nicht tätig werden muss bzw. dass kein Neustart erforderlich wird.

Somit wird also insbesondere auf das temporäre Ausführen abgestellt, welches klare Konditionen vorgibt, wann denn nunmehr die Überbrückungsroutine beendet werden soll. Somit ist das vorgeschlagene Verfahren also in der Lage, selbsttätig die Betriebssystemkomponenten wieder zu aktivieren, ohne dass hierbei die Netzwerkverbindung abgebrochen wird.

Ebenfalls ist erfindungsgemäß vorgesehen, dass ein aktives Deaktivieren der mindestens einen Betriebssystemkomponente ausgeführt wird, derart, dass also nicht lediglich eine Fehlfunktion einer Betriebssystemkomponente vorliegt, sondern vielmehr können es entsprechende Anwendungsszenarien vorsehen, dass aktiv eine Betriebssystemkomponente deaktiviert wird und alternativ eine andere Anwendung ausgeführt wird. Somit wird also tatsächlich ein aktiver Schritt des Deaktivierens vorgeschlagen und nicht lediglich ein passives Auftreten eines Fehlers innerhalb einer Betriebssystemkomponente. Somit ist das Deaktivieren explizit vorgesehen und erfolgt in einem vordefinierten Rahmen derart, dass es anderen Anwendungen ermöglicht wird, eine Auswahl an Betriebssystemkomponenten abzuschalten. Ein Deaktivieren heißt hierbei, dass die Ausführung zumindest eines Teils des Betriebssystems abgebrochen wird. Somit verbleiben also generell die Steuerbefehle des Betriebssystems bzw. der Betriebssystemkomponenten auf dem mobilen Endgerät, und ein Prozess zur Ausführung bzw. zum Betreiben der Komponenten wird angehalten. Hierbei ist es auch möglich, Ausführungsparameter des Ausführens der Betriebssystemkomponenten abzuspeichern und das Ausführen der Betriebssystemkomponenten in dem gleichen Zustand weiterzuführen, falls die Betriebssystemkomponenten wieder aktiviert werden. Somit wird der Zustand des jeweiligen Prozesses abgespeichert, und es erfolgt mittels eines Deaktivierens und eines Aktivierens lediglich ein Pausieren des Ausführens zumindest eines Teils des Betriebssystems.

Die vorgesehene Überbrückungsroutine verhindert, dass die Überprüfung des Vorhandenseins der SIM-Karte bzw. des Sicherheitselements fehlschlägt und somit die Verbindung getrennt wird. So ist es besonders vorteilhaft, Steuerbefehle, welche die Überbrückungsroutine implementieren, auf dem mobilen Endgerät beispielsweise in einem Speicher vorzuhalten. Diese Daten können sich beispielsweise in dem gleichen Speicher befinden, wie sich das Betriebssystem befindet, und können als Alternative zum Ausführen des Betriebssystems bzw. der Betriebssystemkomponenten aktiviert werden. Somit ist es also vorteilhaft, falls zu jedem Zeitpunkt entweder die zu deaktivierenden Betriebssystemkomponenten ausgeführt werden oder die Überbrückungsroutine. Bei einer Überbrückungsroutine handelt es sich somit um eine oder mehrere Anwendungen, welche wiederum Steuerbefehle aufweisen, die derart mit einem Überprüfen des Vorhandenseins des Sicherheitselements interagieren, dass entweder das Vorhandensein vorgetäuscht wird oder aber auch dass das Überprüfen des Sicherheitselements nicht durchgeführt wird.

Gemäß einem Aspekt der vorliegenden Erfindung umfasst die Überbrückungsroutine ein Deaktivieren des Überprüfens des Vorhandenseins des Sicherheitselements. Dies hat den Vorteil, dass die Überbrückungsroutine veranlasst,. dass bei einem Feststellen des Deaktivierens zumindest einer Betriebssystemkomponente, welche zum Überprüfen des Vorhandenseins ausgeführt wird, der Überprüfungsvorgang abgebrochen wird. Hierbei ist es möglich, dass ein Deaktivieren der mindestens einen Betriebssystemkomponente auch gleich ein Deaktivieren der Überprüfung auslöst. Somit stellt die Überbrückungsroutine Steuerbefehle bereit, welche ausgehend von einer Nachricht, welche das Deaktivieren anzeigt, gleich die Überprüfung des Vorhandenseins zumindest pausiert. Somit ist es also besonders vorteilhaft, dass eine Fehlermeldung unterdrückt wird, welche dazu führen könnte, dass die Kommunikationsverbindung getrennt wird.

Da keine Überprüfung des Vorhandenseins stattfindet, ist es nunmehr auch nicht mehr maßgeblich, dass die Betriebssystemkomponenten eine Funktionalität bereitstellen, welche an dem Überprüfen beteiligt ist. Erfolgt beispielsweise das Überprüfen des Vorhandenseins anhand einer periodischen Nachricht, so wird das Anfragen, also das Aussenden dieser Anfragenach- rieht unterdrückt, derart, dass kein Timeout stattfinden kann, der anzeigen würde, dass das Sicherheitselement nicht vorhanden ist. Da gar nicht mehr angefragt wird, ob das Sicherheitselement vorhanden ist, erfolgt also auch kein initiales Signal für das Beginnen einer Zeitspanne, die zu einem Timeout führen würde.

Gemäß einem weiteren Aspekt der vorliegenden Erfindung umfasst die Überbrückungsroutine ein Übersenden einer Nachricht, wobei die Nachricht das Vorhandensein des Sicherheitselements anzeigt. Dies hat den Vorteil, dass eine alternative Komponente bzw. ein alternativer Steuerbefehl der Überbrückungsroutine die Nachricht sendet, dass die SIM-Karte tatsächlich vorhanden ist. So wird stets weiterhin überprüft, ob das Sicherheitselement vorhanden ist, hierbei wird jedoch eine Standardnachricht übersendet, die anzeigt, dass auch bei einer Abwesenheit des Sicherheitselements keine Fehlermeldung bzw. keine Trennung der Netzwerkverbindung stattfinden soll. Somit ist es also möglich, stets die Anfragenachricht weiterzusenden, wobei jedoch beispielsweise eine andere Komponente die entsprechende Antwort gibt, die entweder angibt, dass das Sicherheitselement vorhanden ist, oder aber dass auch bei einem Ausbleiben weiterer Nachrichten keine Fehlerbehandlung durchgeführt werden soll. Somit kann also die erwartete Antwort auf die Sicherheitsabfrage simuliert werden.

Gemäß einem weiteren Aspekt der vorliegenden Erfindung erfolgt das Überprüfen des Vorhandenseins periodisch. Dies hat den Vorteil, dass im Abstand vorbestimmter Zeitintervalle wiederholt das Vorhandensein abgefragt wird und somit auch in einem laufenden Betrieb zu erkennen ist, ob die SIM-Karte bzw. das Sicherheitselement vorhanden ist. Generell kann im Kontext der vorliegenden Erfindung ein Vorhandensein des Sicherheitselements auch als ein Vorhandensein der Funktionalität des Sicherheitselements verstanden werden. Somit ist es also möglich, bei einer Beschädigung des mobilen Endgeräts bzw. des Sicherheitselements auch im laufenden Betrieb stets abzufragen, ob das Sicherheitselement bzw. dessen Funktionalität vorhanden ist.

Gemäß einem weiteren Aspekt der vorliegenden Erfindung wird auf dem mobilen Endgerät ein erstes und ein zweites Betriebssystem zur Ausführung gebracht und lediglich mindestens eine Betriebssystemkomponenten genau eines Betriebssystems deaktiviert. Dies hat den Vorteil, dass beispielsweise das Betriebssystem ausgetauscht werden kann, welches die Anwendungsebene des mobilen Endgeräts bedient. Somit kann ein erstes Betriebssystem bereitgestellt bzw. ausgeführt werden, welches die Hardware, also die strukturellen, physischen Komponenten anspricht, und ein zweites Betriebssystem, welches auf die bereitgestellte Funktionalität der Hardware mittels des ersten Betriebssystems zugreift. Somit ist es also möglich, auch bei einem Deaktivieren eines Betriebssystems ein weiteres Betriebssystem auszuführen, so dass die Funktionalität des mobilen Endgeräts insgesamt bestehen bleibt. Hierbei ist es auch möglich, mindestens Teile von Betriebssystemen derart auszugestalten, dass Hardwarekomponenten virtualisiert werden. Somit ist es für Anwendungen bzw. das Anwendungsbetriebssystem nicht mehr ausschlaggebend, ob tatsächlich auf strukturellen Komponenten zugegriffen wird oder aber auch auf ein Abbild von strukturellen Komponenten.

Gemäß einem weiteren Aspekt der vorliegenden Erfindung wird die deaktivierte mindestens eine Betriebssystemkomponente durch alternative Steuerbefehle ersetzt. Dies hat den Vorteil, dass eine andere Anwendung, welche gemäß einem Anwendungsszenario vorgesehen ist, nunmehr ausgeführt werden kann und somit eine nicht gewünschte Funktionalität einer Betriebssystemkomponente eben nicht mehr zur Ausführung gebracht wird. Hierbei ist es möglich, je nach Anwendungsszenario beispielsweise sicherheitskritische Anwendungen, wie eine Bezahlfunktion, anstatt der Betriebssystemkomponente auszuführen.

Gemäß einem weiteren Aspekt der vorliegenden Erfindung wird das temporäre Ausführen bei einem Detektieren einer Aktivierung der mindestens einen Betriebssystemkomponente aktiv eingestellt. Dies hat den Vorteil, dass das temporäre Ausführen im laufenden Betrieb beendet werden kann, und dass hierbei ein Neustart des mobilen Endgeräts notwendig wäre. Somit ist also erfindungsgemäß vorgesehen, dass klare Kriterien implementiert werden, die anzeigen, wann die temporäre Ausführung nicht mehr notwendig ist und somit im laufenden Betrieb beendet werden kann. Somit wird also nach einem temporären Ausführen eine Pause beendet, in der die mindestens eine Betriebssystemkomponente angehalten wurde. Hierbei bezieht sich ein Einstellen auf das Beenden der temporären Ausführung.

Gemäß einem weiteren Aspekt der vorliegenden Erfindung werden anhand des Sicherheitselements Kommunikationsparameter zur Herstellung der Netzwerkverbindung bereitgestellt. Dies hat den Vorteil, dass herkömmliche Anwendungen gerade im Mobilfunkbereich Wiederverwendung finden können und insbesondere dass eine Funknetzwerkverbindung eingerichtet werden kann. So kann beispielsweise erfindungsgemäß eine SIM-Applikation Wiederverwendung finden, wie sie bereits implementiert ist. Ferner können entsprechende Standards angewendet werden, beispielsweise die eingangs zitierten Standards ETSI TS 102 221 sowie 3GPP TS 31.102.

Gemäß einem weiteren Aspekt der vorliegenden Erfindung umfasst das Überprüfen eine SIM Presence Detection. Dies hat den Vorteil, dass anhand eines periodischen Verfahrens sichergestellt werden kann, ob das Sicherheitselement vorhanden ist bzw. ob die Funktionalität des Sicherheitselements vorhanden ist. So wird im Rahmen der sogenannten SIM Presence Detection eine Anfragenachricht übersendet, die entsprechend beantwortet werden muss. Hierbei sind die zu deaktivierenden Betriebssystemkomponenten beteiligt, so dass bei einem Ausbleiben der Beantwortung der Anfrage davon ausgegangen wird, dass die SIM-Karte bzw. das Sicherheitselement nicht vorhanden ist. Somit wird also die SIM Presence Detection derart abgewandelt, dass die Antwortnachricht von einer anderen Komponente übermittelt werden kann oder aber dass die SIM Presence Detection mitsamt der Betriebssystemkomponenten deaktiviert und später wieder aktiviert wird.

Gemäß einem weiteren Aspekt der vorliegenden Erfindung wird das Sicherheitselement mitsamt einem Baseband-Prozessor einstückig bereitgestellt. Dies hat den Vorteil, dass eine integrierte SIM-Karte, beispielsweise eine iUICC, bereitgestellt werden kann. Einstückig heißt hierbei, dass das Sicherheitselement derart mit dem Baseband-Prozessor verbunden wird, dass diese nicht zerstörungsfrei voneinander gelöst werden können.

Gemäß einem weiteren Aspekt der vorliegenden Erfindung wird das Sicherheitselement als ein Subscriber-Identity-Module SIM, eine Universal Integrated Circuit Card UICC oder eine Integrated Universal Integrated Circuit Card iUICC bereitgestellt. Dies hat den Vorteil, dass sowohl bekannte SIM-Karten als auch neu entwickelte SIM-Karten Verwendung finden können und insbesondere, dass gemäß dem vorliegenden Verfahren eine Integration des mobilen Endgeräts in bestehende Netzwerke möglich ist.

Die Aufgabe wird auch gelöst durch eine Systemanordnung zum sicheren Aufrechterhalten einer Netzwerkverbindung bei einem temporären Austausch von Betriebssystemkomponenten eines mobilen Endgeräts, wobei die Systemanordnung das mobile Endgerät an sich umfasst sowie entsprechende Netzwerkkomponenten, die geeignet sind, gemäß dem vorgeschlagenen Verfahren mit dem mobilen Endgerät zu kommunizieren.

Die Aufgabe wird auch gelöst durch ein mobiles Endgerät zum sicheren Aufrechterhalten einer Netzwerkverbindung bei einem temporären Austausch von Betriebssystemkomponenten eines mobilen Endgeräts, aufweisend ein Mittel eingerichtet zum Herstellen der Netzwerkverbindung zwischen dem mobilen Endgerät und dem drahtlosen Kommunikationsnetzwerk unter Verwendung eines Sicherheitselements des mobilen Endgeräts, dessen Vorhandensein mittels mindestens einer Betriebssystemkomponente des mobilen Endgeräts überprüft wird, ein Mittel eingerichtet zum Deaktivieren der mindestens einen Betriebssystemkomponente, wobei Mittel eingerichtet zum temporären Ausführen einer vorbestimmten Überbrückungsroutine zum Aufrechterhalten der hergestellten Netzwerkverbindung vorgesehen sind, bis die mindestens eine Betriebssystemkomponente wieder aktiviert ist.

Die Aufgabe wird auch gelöst durch ein Kommunikationsprotokoll mit Steuerbefehlen, welche das Verfahren verteilt in einem Kommunikationsnetzwerk ausführen. Die Aufgabe wird auch gelöst durch ein Computerprogrammprodukt mit Steuerbefehlen, welche das vorgeschlagene Verfahren ausführen bzw. die vorgeschlagene Systemanordnung oder das vorgeschlagene mobile Endgerät betreiben.

Hierbei ist es besonders vorteilhaft, dass das Verfahren Verfahrensschritte umfasst, welche mittels struktureller Komponenten der Systemanordnung bzw. des mobilen Endgeräts nachgebildet werden können. Ferner umfasst die Systemanordnung bzw. das mobile Endgerät strukturelle Merkmale, welche geeignet sind, die einzelnen Verfahrensschritte auszuführen. Somit ist es insgesamt erfindungsgemäß möglich, dass das Verfahren die Systemanordnung bzw. das mobile Endgerät betreibt bzw. dass die Systemanordnung oder das mobile Endgerät das entsprechende Verfahren ausführt.

Hierbei erkennt der Fachmann, dass das mobile Endgerät an sich erfindungsgemäß vorgeschlagen wird, und dass das mobile Endgerät eingerichtet ist, mit netzwerktypischen Komponenten zu kommunizieren. Hierbei ist es notwendig, das mobile Endgerät im Zusammenwirken mit den Netzwerckomponenten zu beschreiben, da das mobile Endgerät allein nicht geeignet ist, eine Kommunikation aufzubauen und somit auch erfindungsgemäß das Verfahren zum sicheren Aufrechterhalten einer Netzwerkverbindung auf einen Kommunikationspartner des mobilen Endgeräts angewiesen ist. Hierbei ist jedoch das mobile Endgerät allein eingerichtet, das Vorhandensein der Betriebssystemkomponenten zu überprüfen, diese zu deaktivieren und nach einem temporären Ausführen der vorbestimmten Überbrückungsroutine die Betriebssystemkomponenten wieder zu aktivieren.

Weitere vorteilhafte Ausgestaltungen werden anhand der beigefügten Figuren näher erläutert. Es zeigen:
- Fig. 1:: eine schematische Systemanordnung bzw. eine Komponente des mobilen Endgeräts gemäß einem Aspekt der vorliegenden Erfindung; und
- Fig. 2:: ein schematisches Ablaufdiagramm eines Verfahrens zur sicheren Aufrechterhaltung einer Netzwerkverbindung gemäß einem weiteren Aspekt der vorliegenden Erfindung.

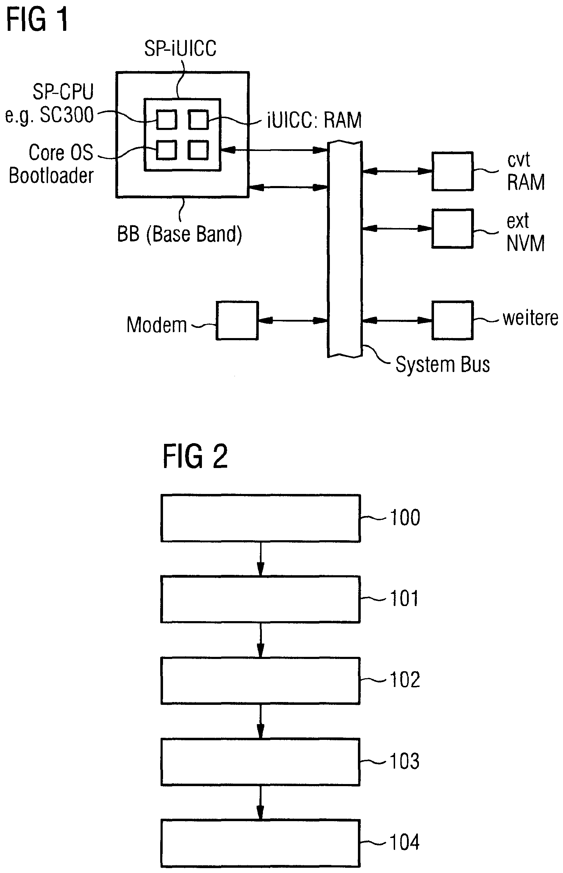

Fig. 1 zeigt in einer schematischen Darstellung Komponenten, welche beispielsweise in dem mobilen Endgerät implementiert sein können. So ist beispielsweise auf der rechten Seite ein externer persistenter Speicher eingezeichnet, welcher als ein sogenannter Non-Volutile-Memory vorliegt. Dieser kann das Betriebssystem bereitstellen und zudem verschiedene Anwendungen, wie beispielsweise ein SIM-Applikation oder eine Bezahlanwendung bereitstellen. Diese Anwendungen oder aber auch Teile des Betriebssystems können in den sogenannten iUICC RAM geladen werden. Das Modem kommuniziert mit diesem Betriebssystem und sendet beispielsweise Statuskommandos. Das Betriebssystem wird temporär ausgelagert und durch ein anderes Betriebssystem, beispielsweise ein Bezahlbetriebssystem, ersetzt. Nunmehr kommt nach z. B. 30 Sekunden die sogenannte Presence-Detection-Anfrage von dem Modem. Nunmehr können die weiteren vorgeschlagenen erfindungsgemäßen Verfahrensschritte Anwendung finden.

In der GSMA Standardisierungsgruppe wird die nächste Generation von UICCs diskutiert, die sogenannten "iUICC". Dabei handelt es sich um eine UICC (siehe ETSI TS 102 221), welche physikalisch in den "Baseband-Controller" als SoC (System On Chip) integriert ist.

Diese iUICC wird auch als SPU (Secure Processing Unit) bezeichnet. Dabei kann es sich um einen bekannten Sicherheitsprozessor, wie er auch in herkömmlichen Smartcards verwendet wird (z. B. ARM SC300-Core) handeln.

Um Herstellungskosten zu optimieren, hat dieser SPU keinen eigenen nichtflüchtigen Speicher (Non-Volatile Memory, NVM), in dem die Daten und der Programmcode sicher gelagert werden können. Stattdessen wird für die Speicherung solcher Code und Datenbereiche das externe NVM (also der Flashspeicher des Gerätes - i.d.R. des Smartphones) benutzt. Diese Daten- und Codebereiche sind verschlüsselt, wobei der Schlüssel nur innerhalb des SPU zugänglich ist und diesen nicht verlassen kann.

Um ein Betriebssystem OS in den SPU zu laden, besitzt der SPU ein Boot-ROM, welches einen Bootloader beinhaltet. Dieser Bootloader lädt beim Startup zunächst ein CoreOS, welches in der Regel vom Halbleiterhersteller geliefert wird und im externen NVM verschlüsselt liegt, in den SPU. Dazu befindet sich im SPU ein RAM-Speicher, der diesen Code (der zuvor natürlich entschlüsselt wurde) aufnimmt.

Dieses CoreOS stellt dabei grundlegende Funktionen bereit und virtualisiert somit die eigentliche Hardware. Zum Beispiel stellt das CoreOS Funktionen zum Memory-Handling (z. B. Transaction-Mechanismus, Beschreiben, Löschen), Kommunikationsfunktionen und vor allem Cryptofunktionen bereit.

Nachdem das CoreOS geladen ist, wird das eigentliche Anwendungs-Betriebssystem geladen. Also im Falle einer USIM ein Telco-OS nach ETSI TS 102 221 / 3GPP 31.102.

In verschiedenen Beschreibungen für mögliche Use-Cases einer solchen iUICC-Plattform wird u. a. die Möglichkeit genannt, dieses Anwendungs-Betriebssystem für spezielle Nutzungssituationen vorübergehend zu "swapen" (auszutauschen), um für eine begrenzte Zeit ein anderes Anwendungsszenario zu ermöglichen (z. B. Mobile Payment oder Ticketing).

Wenn die SIM-Applikation (= das ladbare Anwendungs-Betriebssystem, welches eine USIM implementiert) kurzfristig ausgelagert ist, um z. B. eine Mobile Payment Application zu laden und auszuführen, kann es Probleme bei der sogenannten SIM Presence Detection geben, und das Device könnte aus dem Netzwerk entfernt werden. Diese SIM Presence Detection ist Bestandteil der gültigen ETSI/3GPP Spezifikation. Um sie durchzuführen, sendet das Terminal/Device alle 30 Sekunden ein "STATUS"-Kommando an die SIM. Die SIM muss auf dieses Kommando innerhalb einer maximalen Zeitspanne antworten, um den SIM Presence Detection-Test erfolgreich zu übersehen.

Wenn jedoch bei einer iUICC gerade nicht die SIM-Applikation aktive ist, kann diese auch nicht auf die SIM Presence Detection Anforderung reagieren.

Es wird ein Verfahren beschrieben, welches die SIM Presence Detection auch auf einer iUICC im Falle eines "application swaps" ermöglicht bzw. keine "negativen" Folgen für die Verbindung zum Netzwerk entstehen lässt.

Verschiedene Aspekte werden wie folgt vorgestellt:
1) Eine Möglichkeit ist es gemäß einem Aspekt der vorliegenden Erfindung, auf die SIM Presence Detection im Falle einer iUICC von Seiten des Baseband-Controllers zu verzichten, denn damit die SIM Presence Detection greifen kann, muss gemäß einem Aspekt der vorliegenden Erfindung eine gültige SIM-Applikation zumindest einmal pro Session (nach einem Neustart des Terminals) aktiv gewesen sein. Die Gefahr eines physikalischen Herausnehmens der (SIM-)Karte und des Nutzens dieser in einem anderen Terminal ist bei einer iUICC-Lösung nicht gegeben.
2) Der Nachteil von Lösung 1) besteht allerdings darin, dass damit auch gewisse Sicherheitsmaßnahmen nicht mehr greifen würden. Zum Beispiel wird als Softwaregegenmaßnahme gegen detektierte Angriffe auf die SIM-Applikation gerne das "Muten" der Karte gewählt. Sprich die Karte geht dabei in eine Endlos-Schleife und reagiert nicht mehr auf Kommandos von außen. Nur ein Reset kann die Karte zur Wiederbenutzung freigeben.
   Um nicht solche Gegenmaßnahmen wirkungslos werden zu lassen, sollte Möglichkeit 1) - der Entfall der SIM Presence Detection - nur während des Betriebssystem-Swaps (wenn also die SIM-Applikation gerade ausgelagert ist) ausgesetzt werden.
3) Eine andere Möglichkeit, die SIM Presence Detection in einer iUICC zu realisieren, während die SIM-Applikation ausgelagert ist, ist gemäß einem Aspekt der vorliegenden Erfindung, dass das CoreOS speichert, dass es vorher eine aktive SIM-Applikation ausgelagert hat. Dafür kann in einem speziellen Admin-Bereich des CoreOS eine Default-Antwort hinterlegt werden (also z. B. die Antwortdaten auf ein STATUS-Kommando), welche bei einem SIM Presence Detection Request an den Baseband-Controller zurückgegeben werden kann, ohne dass die SIM-Applikation komplett zurück in den Speicher der SPU geladen werden muss.

Wenn eine der oben erwähnten Möglichkeiten genutzt wird, kommt es gemäß einem Aspekt der vorliegenden Erfindung nicht zum sonst möglichen Verlust der Netzwerkverbindung.

In der GSMA-Standardisierung wird für die nächste Generation von iUICCs diskutiert, dass das Betriebssystem OS zeitweise durch eine andere Anwendung, z. B. Mobile Payment, Ticketing, ausgetauscht wird. Während das OS durch eine andere Anwendung ausgetauscht ist, kann es zu Problemen bei der SIM Presence Detection kommen, so dass eine Verbindung zum Telekommunikationsnetzwerk verlorengehen kann.

Somit wird erfindungsgemäß u. a. vorgeschlagen, auf die SIM Presence Detection zu verzichten, wobei Sicherheitsmaßnahmen gegen Angriffe wirkungslos werden können. Somit wird bevorzugt vorgeschlagen, nur während des Austausches des Betriebssystems bzw. Teilen des Betriebssystems auf die SIM Presence Detection zu verzichten. Hierbei ist es möglich, dass das CoreOS sich merkt, dass es vorher eine Komponente des Betriebssystems gegen eine andere Anwendung ausgetauscht hat und gibt bei der SIM Presence Detection eine voreingestellte Antwort aus. Somit erfolgt kein Verlust der Netzwerkverbindung bei Austausch des Betriebssystems durch andere Anwendungen.

Fig. 2 zeigt ein schematisches Ablaufdiagramm eines Verfahrens zum sicheren Aufrechterhalten einer Netzwerkverbindung bei einem temporären Austausch von Betriebssystemkomponenten eines mobilen Endgeräts, aufweisend ein Herstellen 100 der Netzwerkverbindung zwischen dem mobilen Endgerät und einem drahtlosen Kommunikationsnetzwerk unter Verwendung eines Sicherheitselements, dessen Vorhandensein mittels mindestens einer Betriebssystemkomponente des mobilen Endgeräts überprüft 101 wird, ein Deaktivieren 102 der mindestens einer Betriebssystemkomponente, wobei ein temporäres Ausführen 103 einer vorbestimmten Überbrückungsroutine zum Aufrechterhalten der hergestellten 100 Netzwerkverbindung durchgeführt wird, bis die mindestens eine Betriebssystemkomponente wieder aktiviert 104 wird. Der Fachmann erkennt hierbei, dass die einzelnen Verfahrensschritte iterativ und/oder in einer anderen Reihenfolge ausgeführt werden können. Ferner können weitere Unterschritte vorgesehen sein.

## Patentansprüche

1. Verfahren zum sicheren Aufrechterhalten einer Netzwerkverbindung bei einem temporären Austausch von Betriebssystemkomponenten eines mobilen Endgeräts, aufweisend:
- Herstellen (100) der Netzwerkverbindung zwischen dem mobilen Endgerät und einem drahtlosen Kommunikationsnetzwerk unter Verwendung eines Sicherheitselements dessen Vorhandensein mittels mindestens einer Betriebssystemkomponente des mobilen Endgeräts überprüft (101) wird;
- Deaktivieren (102) der mindestens einen Betriebssystemkomponente, **dadurch gekennzeichnet, dass**
- ein temporäres Ausführen (103) einer vorbestimmten Überbrückungsroutine zum Aufrechterhalten der hergestellten (100) Netzwerkverbindung durchgeführt wird, bis die mindestens eine Betriebssystemkomponente wieder aktiviert (104) wird,
- wobei die Überbrückungsroutine ein Übersenden einer Nachricht umfasst, wobei die Nachricht das Vorhandensein des Sicherheitselements anzeigt,
wobei es nicht aktiv überprüft wird, ob das Sicherheitselement tatsächlich vorhanden ist, und wobei die Nachricht einen Hinweis darauf erhält, dass zumindest derzeit ein Abfragen des Vorhandenseins des Sicherheitselements nicht notwendig bzw. nicht gewollt ist.

2. Verfahren nach Anspruch 1, **dadurch gekennzeichnet, dass** die Überbrückungsroutine ein Deaktivieren des Überprüfens (101) des Vorhandenseins des Sicherheitselements umfasst.

3. Verfahren nach einem der vorhergehenden Ansprüche, **dadurch gekennzeichnet, dass** das Überprüfen (101) des Vorhandenseins periodisch erfolgt.

4. Verfahren nach einem der vorhergehenden Ansprüche, **dadurch gekennzeichnet, dass** auf dem mobilen Endgerät mindestens ein erstes und ein zweites Betriebssystem zur Ausführung gebracht werden und lediglich mindestens eine Betriebssystemkomponente genau eines Betriebssystems deaktiviert wird (102).

5. Verfahren nach einem der vorhergehenden Ansprüche, **dadurch gekennzeichnet, dass** die deaktivierte (102) mindestens eine Betriebssystemkomponente durch alternative Steuerbefehle ersetzt wird.

6. Verfahren nach einem der vorhergehenden Ansprüche, **dadurch gekennzeichnet, dass** das temporäre Ausführen (103) bei einem Detektieren einer Aktivierung (104) der mindestens einen Betriebssystemkomponente aktiv eingestellt wird.

7. Verfahren nach einem der vorhergehenden Ansprüche, **dadurch gekennzeichnet, dass** anhand des Sicherheitselements Kommunikationsparameter zur Herstellung der Netzwerkverbindung bereitgestellt werden.

8. Verfahren nach einem der vorhergehenden Ansprüche, **dadurch gekennzeichnet, dass** das Überprüfen (101) eine SIM Presence Detection umfasst.

9. Verfahren nach einem der vorhergehenden Ansprüche, **dadurch gekennzeichnet, dass** das Sicherheitselement mitsamt einem Baseband-Prozessor einstückig bereitgestellt wird.

10. Verfahren nach einem der vorhergehenden Ansprüche, **dadurch gekennzeichnet, dass** das Sicherheitselement als ein Subscriber-Identity- Module SIM, eine Universal integrated Circuit Card UICC oder eine integrated Universal integrated Circuit Card iUICC bereitgestellt wird.

11. Systemanordnung zum sicheren Aufrechterhalten einer Netzwerkverbindung bei einem temporären Austausch von Betriebssystemkomponenten eines mobilen Endgeräts, aufweisend:
- das mobile Endgerät, welches im Zusammenwirken mit einer Netzwerkkomponente der Systemanordnung ein Herstellen (100) der Netzwerkverbindung zwischen dem mobilen Endgerät und einem drahtlosen Kommunikationsnetzwerk veranlasst, unter Verwendung eines Sicherheitselements dessen Vorhandensein mittels mindestens einer Betriebssystemkomponente des mobilen Endgeräts überprüfbar (101) ist;
- Mittel eingerichtet zum Deaktivieren (102) der mindestens Betriebssystemkomponente, **dadurch gekennzeichnet, dass**
- Mittel eingerichtet zum temporären Ausführen (103) einer vorbestimmten Überbrückungsroutine zum Aufrechterhalten der hergestellten (100) Netzwerkverbindung vorgesehen sind, bis die mindestens eine Betriebssystemkomponente wieder aktiviert (104) ist, wobei das Mittel eingerichtet ist, eine Nachricht zu übersenden, und die Nachricht das Vorhandensein des Sicherheitselements anzeigt,
wobei das Mittel eingerichtet ist, nicht aktiv zu überprüfen, ob das Sicherheitselement tatsächlich vorhanden ist, und wobei die Nachricht einen Hinweis darauf erhält, dass zumindest derzeit ein Abfragen des Vorhandenseins des Sicherheitselements nicht notwendig bzw. nicht gewollt ist.

12. Mobiles Endgerät zum sicheren Aufrechterhalten einer Netzwerkverbindung bei einem temporären Austausch von Betriebssystemkomponenten eines mobilen Endgeräts, aufweisend:
- Mittel eingerichtet zum Herstellen (100) der Netzwerkverbindung zwischen dem mobilen Endgerät und einem drahtlosen Kommunikationsnetzwerk unter Verwendung eines Sicherheitselements des mobilen Endgeräts dessen Vorhandensein mittels mindestens einer Betriebssystemkomponente des mobilen Endgeräts überprüft (101) wird;
- Mittel eingerichtet zum Deaktivieren (102) der mindestens einen Betriebssystemkomponente, **dadurch gekennzeichnet, dass**
- Mittel eingerichtet zum temporären Ausführen (103) einer vorbestimmten Überbrückungsroutine zum Aufrechterhalten der hergestellten (100) Netzwerkverbindung vorgesehen sind, bis die mindestens eine Betriebssystemkomponente wieder aktiviert (104) ist, wobei das Mittel eingerichtet ist, eine Nachricht zu übersenden, und die Nachricht das Vorhandensein des Sicherheitselements anzeigt,
wobei das Mittel eingerichtet ist, nicht aktiv zu überprüfen, ob das Sicherheitselement tatsächlich vorhanden ist, und wobei die Nachricht einen Hinweis darauf erhält, dass zumindest derzeit ein Abfragen des Vorhandenseins des Sicherheitselements nicht notwendig bzw. nicht gewollt ist.

13. Computerprogrammprodukt mit Steuerbefehlen, welche das Verfahren gemäß einem der Ansprüche 1 bis 10 ausführen, wenn sie auf einem Computer zur Ausführung gebracht werden.

## Claims

1. Method for securely maintaining a network connection during a temporary replacement of operating system components of a mobile terminal, comprising:
- Establishing (100) the network connection between the mobile terminal and a wireless communication network using a security element whose presence is checked (101) by means of at least one operating system component of the mobile terminal;
- deactivating (102) the at least one operating system component, **characterized in that**
- a predetermined bridging routine for maintaining the established (100) network connection is temporarily executed (103) until the at least one operating system component is reactivated (104),
- wherein the bridging routine comprises sending a message, the message indicating the presence of the security element,
wherein it is not actively checked whether the security element is actually present, and wherein the message obtains an indication that at least currently querying the presence of the security element is not necessary or not desired.

2. Method according to claim 1, **characterized in that** the bridging routine comprises deactivating the checking (101) of the presence of the security element.

3. Method according to any one of the preceding claims, **characterized in that** the checking (101) of the presence is performed periodically.

4. Method according to one of the preceding claims, **characterized in that** at least a first and a second operating system are brought to execution on the mobile terminal and only at least one operating system component of precisely one operating system is deactivated (102).

5. Method according to any one of the preceding claims, **characterized in that** the deactivated (102) at least one operating system component is replaced by alternative control commands.

6. Method according to any one of the preceding claims, **characterized in that** the temporary execution (103) is actively stopped upon detection of an activation (104) of the at least one operating system component.

7. Method according to any one of the preceding claims, **characterized in that** communication parameters for establishing the network connection are provided by means of the security element.

8. Method according to one of the preceding claims, **characterized in that** the checking (101) comprises a SIM presence detection.

9. Method according to any one of the preceding claims, **characterized in that** the security element together with a baseband processor is provided integrally.

10. Method according to any one of the preceding claims, **characterized in that** the security element is provided as a subscriber identity module SIM, a universal integrated circuit card UICC or an integrated universal integrated circuit card iUICC.

11. System arrangement for securely maintaining a network connection during a temporary replacement of operating system components of a mobile terminal, comprising:
- the mobile terminal causing, in cooperation with a network component of the system arrangement, establishment (100) of the network connection between the mobile terminal and a wireless communication network, using a security element whose presence is checkable (101) by means of at least one operating system component of the mobile terminal;
- means arranged for deactivating (102) the at least one operating system component,
**characterized in that**
- means arranged to temporarily execute (103) a predetermined bridging routine for maintaining the established (100) network connection are provided, until the at least one operating system component is reactivated (104), wherein the means is arranged to send a message and the message indicates the presence of the security element,
wherein the means is arranged not to actively check whether the security element is actually present, and wherein the message obtains an indication that, at least currently, querying the presence of the security element is not necessary or not desired.

12. Mobile terminal for securely maintaining a network connection during a temporary replacement of operating system components of a mobile terminal, comprising:
- means arranged for establishing (100) the network connection between the mobile terminal and a wireless communication network using a security element whose presence is checked (101) by means of at least one operating system component of the mobile terminal;
- means arranged for deactivating (102) the at least one operating system component,
**characterized in that**
- means arranged to temporarily execute (103) a predetermined bridging routine for maintaining the established (100) network connection are provided, until the at least one operating system component is reactivated (104), wherein the means is arranged to send a message and the message indicates the presence of the security element,
wherein the means is arranged not to actively check whether the security element is actually present, and wherein the message obtains an indication that, at least currently, querying the presence of the security element is not necessary or not desired.

13. Computer program product with control instructions which execute the method according to any one of claims 1 to 10 when brought to execution on a computer.

## Revendications

1. Procédé destiné au maintien sécurisé d'une connexion réseau lors d'un échange temporaire de composants de système d'exploitation d'un terminal mobile, comportant :
- établissement (100) de la connexion réseau entre le terminal mobile et un réseau de communication sans fil en utilisant un élément de sécurité dont la présence est vérifiée (101) au moyen d'au moins un composant de système d'exploitation du terminal mobile ;
- désactivation (102) du moins un composant de système d'exploitation, **caractérisé en ce que**
- une exécution (103) temporaire d'une routine prédéterminée de pontage pour le maintien sécurisé de la connexion réseau établie (100) est effectuée jusqu'à ce que le au moins un composant de système d'exploitation soit à nouveau activé (104),
- cependant que la routine de pontage comprend une transmission d'un message, cependant que le message indique la présence de l'élément de sécurité,
- cependant qu'il n'est pas vérifié activement si l'élément de sécurité est effectivement présent, et cependant que le message obtient une indication de ce que, au moins pour l'instant, une interrogation sur la présence de l'élément de sécurité n'est pas nécessaire ou pas voulue.

2. Procédé selon la revendication 1, **caractérisé en ce que** la routine de pontage comprend une désactivation de la vérification (101) de la présence de l'élément de sécurité.

3. Procédé selon une des revendications précédentes, **caractérisé en ce que** la vérification (101) de la présence a lieu périodiquement.

4. Procédé selon une des revendications précédentes, **caractérisé en ce que**, sur le terminal mobile, au moins un premier et un deuxième système d'exploitation sont mis à exécution et seulement au moins un composant de système d'exploitation d'exactement un système d'exploitation est désactivé (102).

5. Procédé selon une des revendications précédentes, **caractérisé en ce que** le au moins un composant de système d'exploitation désactivé (102) est remplacé par des instructions de commande alternatives.

6. Procédé selon une des revendications précédentes, **caractérisé en ce que** l'exécution (103) temporaire est activement suspendue lors d'une détection d'une activation (104) du au moins un composant de système d'exploitation.

7. Procédé selon une des revendications précédentes, **caractérisé en ce que**, au moyen de l'élément de sécurité, des paramètres de communication pour l'établissement de la connexion réseau sont mis à disposition.

8. Procédé selon une des revendications précédentes, **caractérisé en ce que** la vérification (101) comprend une SIM Presence Detection.

9. Procédé selon une des revendications précédentes, **caractérisé en ce que** l'élément de sécurité est mis à disposition en un seul tenant avec un processeur Baseband.

10. Procédé selon une des revendications précédentes, **caractérisé en ce que** l'élément de sécurité est mis à disposition sous forme d'un Subscriber-Identity-Module SIM, d'une Universal Integrated Circuit Card UICC ou d'une integrated Universal Integrated Circuit Card IUICC.

11. Agencement de système pour le maintien sécurisé d'une connexion réseau lors d'un échange temporaire de composants de système d'exploitation d'un terminal mobile, comportant :
- le terminal mobile, lequel, en co-agissement avec un composant de système d'exploitation de l'agencement de système, déclenche un établissement (100) de la connexion réseau entre le terminal mobile et un réseau de communication sans fil, en utilisant un élément de sécurité dont la présence peut être vérifiée (101) au moyen d'au moins un composant de système d'exploitation du terminal mobile ;
- moyen équipé pour la désactivation (102) du moins un composant de système d'exploitation, **caractérisé en ce que**
- moyen équipé pour l'exécution (103) temporaire d'une routine prédéterminée de pontage pour le maintien de la connexion réseau établie (100) est prévu, jusqu'à ce que le au moins un composant de système d'exploitation soit à nouveau activé (104), cependant que le moyen est équipé pour transmettre un message, et le message indique la présence de l'élément de sécurité.
cependant que le moyen est équipé pour ne pas vérifier activement si l'élément de sécurité est vraiment présent, et cependant que le message obtient une indication de ce que, au moins pour l'instant, une interrogation sur la présence de l'élément de sécurité n'est pas nécessaire ou pas voulue.

12. Terminal mobile pour le maintien sécurisé d'une connexion réseau lors d'un échange temporaire de composants de système d'exploitation d'un terminal mobile, comportant :
- moyen équipé pour l'établissement (100) de la connexion réseau entre le terminal mobile et un réseau de communication sans fil, en utilisant un élément de sécurité du terminal mobile dont la présence est vérifiée (101) au moyen d'au moins un composant de système d'exploitation du terminal mobile ;
- moyen équipé pour la désactivation (102) du moins un composant de système d'exploitation, **caractérisé en ce que**
- moyen équipé pour l'exécution (103) temporaire d'une routine prédéterminée de pontage pour le maintien de la connexion réseau établie (100) est prévu, jusqu'à ce que le au moins un composant de système d'exploitation soit à nouveau activé (104), cependant que le moyen est équipé pour transmettre un message, et le message indique la présence de l'élément de sécurité.
cependant que le moyen est équipé pour ne pas vérifier activement si l'élément de sécurité est vraiment présent, et cependant que le message obtient une indication de ce que, au moins pour l'instant, une interrogation sur la présence de l'élément de sécurité n'est pas nécessaire ou pas voulue.

13. Produit programme d'ordinateur ayant des instructions de commande qui exécutent le procédé suivant une des revendications de 1 à 10 quand elles sont mises à exécution sur un ordinateur.
